# EUROPÄISCHE PATENTSCHRIFT

(11) **EP 2 812 174 B1**
(45) Veröffentlichungstag und Bekanntmachung des Hinweises auf die Patenterteilung: **29.03.2017**
(21) Anmeldenummer: 13700377.8
(22) Anmeldetag: 14.01.2013
(51) Int. Cl.: B29C 65/08, B29C 65/74, B65B 51/22, B65B 51/30, B65B 1/22, B65B 9/20, B65B 25/04

(54) **VERFAHREN UND VORRICHTUNG ZUR KONFEKTIONIERUNG VON SCHLAUCHBEUTELN AUS DÜNNEN KUNSTSTOFFFOLIEN MITTELS EINES ULTRASCHALL-SCHWEISSVERFAHRENS**
METHOD AND DEVICE FOR MAKING TUBULAR BAGS OF THIN PLASTIC FILMS BY MEANS OF AN ULTRASOUND WELDING PROCESS
PROCÉDÉ ET DISPOSITIF POUR CONFECTIONNER DES SACS TUBULAIRES À PARTIR DE MINCES FEUILLES PLASTIQUES AU MOYEN D'UN PROCÉDÉ DE SOUDAGE PAR ULTRASONS

(30) Priorität: 10.02.2012 DE 102012202016
(43) Veröffentlichungstag der Anmeldung: 17.12.2014
(73) Patentinhaber: Pantec AG, 6362 Stansstad (CH)
(72) Erfinder: ROHRER, Hans-Peter, 4313 Moehlin (CH); LAUTZ, Carsten, 6644 Orselina (CH); PETER, Hans, 5027 Herznach (CH)
(74) Vertreter: Patentanwälte Magenbauer & Kollegen Partnerschaft mbB
(86) Internationale Anmeldenummer: PCT/EP2013/050536
(87) Internationale Veröffentlichungsnummer: WO 2013/117383

(56) Entgegenhaltungen:
- EP-A2- 1 127 794
- GB-A- 2 248 796
- US-A- 3 816 216

## Beschreibung

Die Erfindung betrifft ein Verfahren und eine Vorrichtung zur Konfektionierung von dünnen Kunststofffolien, welche insbesondere in Form von Schlauchbeuteln für die Aufnahme von verschiedenartigen Produkten, beispielsweise in der Lebensmittelindustrie, portionsweise unterteilt und abgetrennt werden.

Für die Herstellung und Befüllung von sogenannten Schlauchbeutel-Verpackungen werden eine oder mehrere Lagen von Kunststofffolien in vordefinierten Abständen miteinander durchgängig quer zur Laufrichtung verschweißt und an der so entstandenen Schweißlinie abgetrennt, damit die einzelnen Schlauchbeutel voneinander separiert werden. Insbesondere in der Nahrungsmittelindustrie werden hierzu vergleichsweise dünne Kunststofffolien eingesetzt, beispielsweise aus PP, PET oder Verbundkunststoffe, die in einer vertikalen oder horizontalen Schlauchbeutel-Verpackungsmaschine fortlaufend über die gesamte Breite der Schlauchbeutel-Verpackung verschweißt werden.

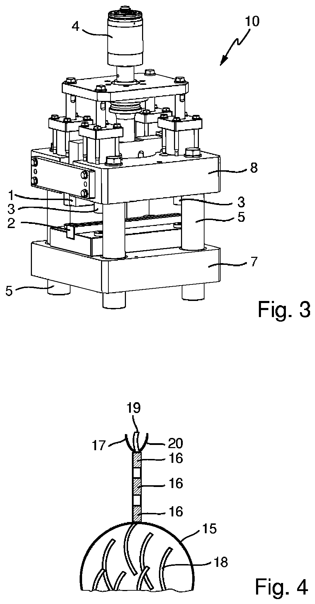

Für die Erzeugung von vergleichsweise langen Schweißlinien bei derartigen Schlauchbeuteln wurden im Stand der Technik bisher thermische Schweißverfahren eingesetzt, die über die Erzeugung von Hitze die Kunststofffolien lokal miteinander verschweißen. Bei der Methode des thermischen Verschweißens besteht jedoch die Gefahr, dass sich Produktreste zwischen den Schweißnähten verfangen können (vgl. Fig. 4). Insbesondere bei leichten und daher nicht gut schüttbaren Produkten, wie zum Beispiel Salatblättern oder Ähnlichem, die in der Regel vertikal abgepackt werden, kann es dazu kommen, dass einige Produktreste im Bereich der Schweißnaht verbleiben, was zu Undichtigkeiten des Schlauchbeutels und somit zu einem unerwünschten Ausschuss im Produktionsprozess führt. Um dies zu verhindern, werden bei heutigen derartigen thermischen Schlauchbeutel-Verpackungsmaschinen die Produktionsgeschwindigkeiten vergleichsweise gering gehalten, damit die Produkte ausreichend Zeit haben, in die Bereiche zu fallen, in welchen keine Schweißnaht gebildet wird und somit auch keine Trennung erfolgt. Der Produktionsgeschwindigkeit sind daher im Stand der Technik deutliche Grenzen gesetzt. Außerdem kann sich bei diesen thermischen Schlauchbeutel-Verpackungsmaschinen aufgrund einer Verlagerung der Schweißlinie und der Trennlinie außen eine Art Tasche bilden, in der sich ebenfalls Produktreste anlagern können. Dies führt zu einem unhygienischen Eindruck der verpackten Produkte und ist daher möglichst zu vermeiden, um den Ausschuss so gering wie möglich zu halten.

Eine Vorrichtung zum Abdichten von Schlauchbeuteln ist aus EP 1 127 794 A2 bekannt. Die Schlauchbeutel werden an der Trennstelle mittels eines Bearbeitungswerkzeugs und eines Gegenwerkzeugs über Ultraschall miteinander verschweißt, welche beide mit im Wesentlichen planen Stirnflächen versehen sind. Nach dem Verschweißen werden die Schlauchbeutel über eine separate Schneideeinrichtung zwischen zwei Schweißstellen abgetrennt.

Eine weitere Vorrichtung zum Verschweißen von Schlauchbeuteln ist aus GB 2 248 796 A bekannt, wobei hier das mit Ultraschall beaufschlagte Bearbeitungswerkzeug fest gegen das Gegenwerkzeug gepresst wird. Der Anpressdruck wird dann für ein anschließendes Abtrennen der verschweißten Schlauchbeutel weiter erhöht.

Das US-Patent US 3,816,216 betrifft ein Verfahren zum Verbinden von Materialbahnen aus thermoplastischem Polymer, wie zum Beispiel Kunstleder, die mittels eines Hochfrequenzschweissverfahrens miteinander verbunden und in einer spezifischen Weise voneinander abgetrennt werden. Mit dieser Vorrichtung wird eine runde, weiche Schneidfläche an der Trennstelle der Materialbahnen erzeugt.

Demgegenüber liegt der vorliegenden Erfindung die Aufgabe zugrunde, ein Verfahren und eine Vorrichtung zur Konfektionierung von dünnen Kunststofffolien in Form von einer Art Schlauchbeutel für die portionierte Aufnahme von Produkten bereitzustellen, bei welchem eine höhere Prozessgeschwindigkeit möglich ist und ein Ausschuss aufgrund von undichten Schweißnähten beziehungsweise im Bereich der Schweißlinien haftenden oder verbleibenden Produktresten vermieden wird.

Diese Aufgabe wird mit einem Verfahren mit den Schritten nach Anspruch 1 sowie mit einer Vorrichtung mit den Merkmalen des Anspruchs 5 gelöst. Vorteilhafte Ausgestaltungen und Weiterbildungen der Erfindung sind Gegenstand der abhängigen Ansprüche.

Gemäß der vorliegenden Erfindung wird ein Verfahren zur Konfektionierung von zwei- oder mehrlagigen dünnen Kunststofffolien, welche in Form von Schlauchbeuteln für eine portionierte Aufnahme von verschiedenartigen Produkten unterteilt und abgetrennt werden, vorgeschlagen, wobei die Kunststofffolien in vorherbestimmten Abständen zur Bildung von beutelartigen Behältnissen mit im Wesentlichen quer zur Längsrichtung verlaufenden Schweißnähten versehen werden und die Behältnisse durch einen Schnitt- oder Trennvorgang jeweils voneinander separiert werden.

Das Verfahren nach der Erfindung weist die folgenden Schritte auf:
a) Verschweißen der Folien in vorherbestimmten Abständen mittels eines Ultraschall-Schweißverfahrens, wobei zwischen einem Bearbeitungswerkzeug und einem Gegenwerkzeug ein definierter, folienabhängiger Abstand beim Querschweißen eingehalten wird;
b) Vereinzeln der so verschweißten Schlauchbeutel mittels eines mechanischen Trennungsverfahrens ohne oder mit verringerter Ultraschallanregung an der Stelle der jeweiligen Schweißnaht beziehungsweise Schweißlinie.

Mit der Erfindung wird somit eine Art zweistufiges Verfahren für die Herstellung von Schlauchbeuteln vorgeschlagen. In einem ersten Schritt wird an der jeweiligen Schweißlinie eine Schweißnaht unter Verwendung eines Ultraschall-Schweißverfahrens erzeugt, wobei das Bearbeitungswerkzeug und mehrere Gravuren aufweist das entsprechende Gegenwerkzeug hierbei in einem vordefinierten, folienabhängigen Abstand voneinander gehalten werden. In einem zweiten, innerhalb der gleichen Zustellbewegung anschließenden Schritt werden die Schlauchbeutel sodann jeweils vereinzelt, das heißt an den Trennlinien im Bereich der Schweißnähte voneinander abgetrennt, wobei hierbei bewusst die Ultraschallanregung abgestellt ist.

Die Vereinzelung in dem zweiten Schritt b) erfolgt daher mit einem im Wesentlichen rein mechanischen Trennungsverfahren ohne Ultraschallanregung. Auf diese Weise können dicht verschlossene Schweißnähte mit vergleichsweise hoher Prozessgeschwindigkeit gebildet werden, ohne dass die Gefahr besteht, dass Produktreste sich in den jeweiligen Schweißnähten verfangen. Im Gegensatz zu dem thermischen Verschweißen wird bei dem Ultraschall-Schweißverfahren eine vergleichsweise exakte Schweißnaht auch bei sehr dünnen Folienmaterialien und nicht gut schüttbaren Produkten erzeugt.

Bei einer alternativen Vorrichtung und einem alternativen Verfahren wird nach dem Schweißvorgang die Amplitude so weit verringert, dass gefahrlos der Schneidvorgang durchgeführt werden kann. Die Amplitude wird also nicht vollständig auf Null zurückgefahren, d.h. der Ultraschallgenerator abgeschaltet, sondern auf einen Wert von 10% bis 30% verringert.

Die so hergestellten Schweißnähte sind somit unkritisch hinsichtlich des Verfangens von Produktresten im Bereich der Verschweißung unabhängig von der Art der Produkte. Die anschließende rein mechanische Vereinzelung der Schlauchbeutel kann insbesondere auch bei sehr dünnen Kunststofffolien, deren Dicken beispielsweise im Bereich von 30 µm liegen, und bei einer Länge der Schweißnähte von etwa 5 cm, bis mehreren 10 cm, welche bei heutigen derartigen dünnen Schlauchbeuteln gefordert werden, einfach durchgeführt werden. Die Dichtigkeit der Verschweißung ist mit hoher Sicherheit gewährleistet und gleichzeitig wird eine gute Trennung beziehungsweise Separierung der einzelnen mit Produkten gefüllten Schlauchbeutel voneinander ermöglicht. Durch den vordefinierten minimalen Bearbeitungsspalt zwischen dem Bearbeitungswerkzeug und dem Gegenwerkzeug wird zudem gewährleistet, dass das Bearbeitungswerkzeug beziehungsweise das Gegenwerkzeug beim Ultraschall-Verschweißen nicht beschädigt wird / werden. Da die anschließende Vereinzelung der Schlauchbeutel mit einem mechanischen Verfahren ohne oder mit verringerter Ultraschallanregung der Werkzeugteile erfolgt, können das Gegenwerkzeug und das Bearbeitungswerkzeug dann näher aufeinander zugefahren werden, so dass mittels der Schneidkante die Abtrennung der einzelnen Schlauchbeutel im Bereich der Schweißlinien erfolgt.

Durch das Verschweißen mittels Ultraschall-Schweißens wird im Gegensatz zum thermischen Schweißen an der Schweißlinie eine Art Versprödung des Materials hervorgerufen, die es ermöglicht, vergleichsweise einfach eine anschließende mechanische Trennung der Schlauchbeutel vorzunehmen. Die Trennung ist dabei sicher gewährleistet auch über einen langen Bereich von beispielsweise mehreren 10 cm, was den üblichen Breiten von manchen derartigen Schlauchbeuteln entspricht.

Erfindungsgemäß wird nach Schritt a) das Bearbeitungswerkzeug näher an das Gegenwerkzeug herangeführt. Da im Schritt b) zur Vereinzelung der verschweißten Schlauchbeutel eine Anregung mittels Ultraschall nicht mehr vorhanden ist, können die beiden Werkzeugteile dann ohne die Gefahr einer Beschädigung oder Zerstörung näher aneinander herangeführt werden als beim Ultraschallschweißen. Aus diesem Grund kann recht einfach und mit ein und demselben Bearbeitungswerkzeug und Gegenwerkzeug eine Abtrennung zur Vereinzelung der verschweißten und befüllten Schlauchbeutel erfolgen.

Nach einer vorteilhaften Ausgestaltung der Erfindung werden in Schritt b) eines Trennens der Schlauchbeutel das Bearbeitungswerkzeug und das Gegenwerkzeug direkt miteinander in Berührung gebracht. Hierbei kann entweder das Bearbeitungswerkzeug oder das Gegenwerkzeug mit einer entsprechenden Führung und einem Antrieb bewegt werden. Alternativ können auch beide aufeinander zu bewegt werden. Die Trennung der Schlauchbeutel an der Trennlinie, welche im Bereich der Schweißnaht liegt, erfolgt in diesem Fall durch den direkten Kontakt der beiden Werkzeugteile und damit durch ein Eindringen in das Material der Kunststofffolien. Hierfür ist vorzugsweise eines der Werkzeugteile mit einer Art stumpfen Schneide oder Ähnlichem ausgebildet, so dass durch das Eindringen in das Material der Kunststofffolien eine sichere Trennung entlang der gesamten Trennungslinie erfolgt.

Nach einer weiteren vorteilhaften Ausgestaltung der Erfindung erfolgt die Steuerung der Anschaltung und Abschaltung der Ultraschallanregung des Bearbeitungswerkzeuges in Abhängigkeit von einer Steuerung eines Maschinenantriebs, wie zum Beispiel der Servokurve des Antriebs der Verpackungsmaschine. Das erfindungsgemäße Verfahren kann hierdurch in bestehende Verpackungsmaschinen leicht integriert werden und die An- und Abschaltung der Ultraschallanregung der Werkzeugteile erfolgt direkt entsprechend der jeweiligen Bearbeitungsstufe der Verpackungsmaschine.

Nach einer weiteren vorteilhaften Ausgestaltung der Erfindung werden das Bearbeitungswerkzeug und das Gegenwerkzeug bei jeder Bearbeitung eines Schlauchbeutels kontinuierlich zusammengefahren und es werden die folgenden Unterschritte dabei ausgeführt:
i) Bewegen des Gegenwerkzeuges während der Ultraschallanregung des Bearbeitungswerkzeuges bis zum Auftreffen auf gefederte Distanzklötze und Durchführung der Schweißung;
ii) Abschalten der Ultraschallanregung des Bearbeitungswerkzeuges während des Einfederns in die Distanzklötze, wobei ein im Wesentlichen konstanter, paralleler Abstand zwischen beiden Teilen des Werkzeuges aufrechterhalten wird;
iii) Überwinden der Federkraft der gefederten Distanzklötze und weiteres Zusammenfahren der beiden Teile des Werkzeugs zur Durchführung der Trennung an einer Trennlinie; und
iv) Zurückfahren der beiden Teile des Werkzeuges.

Mit diesem quasi vierstufigen Prozess kann eine sichere Verschweißung der befüllten Schlauchbeutel gewährleistet werden und ein exaktes Ergebnis hinsichtlich der Abtrennung der einzelnen Schlauchbeutel wird ebenfalls erreicht. Mit dem so beschriebenen vierstufigen Verfahren wird mit vergleichsweise einfacher konstruktiver Ausgestaltung der Vorrichtung ein sicherer konstanter Abstand während des Ultraschall-Schweißens zwischen den Werkzeugteilen gewährleistet. Die Federkraft der Distanzklötze ist dabei so eingestellt, dass sie anschließend durch den Antrieb der Vorrichtung weiter überwunden werden kann und direkt mit den gleichen Werkzeugteilen, das heißt dem Bearbeitungswerkzeug und dem Gegenwerkzeug, auch die Trennung an einer Trennlinie im Bereich der Verschweißung erfolgen kann.

Gemäß einer demgegenüber alternativen Ausführungsform der Erfindung sind keine gefederten Distanzklötze vorgesehen, sondern das Bearbeitungswerkzeug und das Gegenwerkzeug werden beim Verschweißen mittels Ultraschall durch eine spezielle Steuerung auf einem definierten Abstand zueinander gehalten. Das Gegenwerkzeug kann dabei über Federn mit dem Maschinenaufbau gekoppelt sein. Das Bearbeitungswerkzeug wird auf das Gegenwerkzeug hinzu bewegt, bis ein vorherbestimmter, folienabhängiger Abstand bzw. Spalt zwischen dem Gegenwerkzeug und dem Bearbeitungswerkzeug eingestellt ist. Die Ultraschallanregung wird dabei schon vor dem Einfahren des Bearbeitungswerkzeugs in Richtung auf das Gegenwerkzeug angestellt, so dass das Bearbeitungswerkzeug unter Ultraschallanregung gegen die zu verschweißenden Folien einfährt. Nachdem die Ultraschallanregung gestoppt wurde, wird der Trennprozess eingeleitet, indem das Bearbeitungswerkzeug und das Gegenwerkzeug weiter gegeneinander verfahren werden bzw. mit einer höheren Druckkraft aufeinandergepresst werden. Durch diesen letzten Schritt wird dann der mechanische Trennprozess durchgeführt, der aufgrund der vorherigen Versprödung an der Stelle der Schweißnaht durch die Ultraschallverschweißung leicht durchführbar ist. Bei dieser alternativen Ausgestaltung sind somit keine speziellen gefederten Distanzklötze für die Durchführung des Verfahrens nach der Erfindung erforderlich.

Die Erfindung betrifft ebenso eine Vorrichtung zur Konfektionierung von dünnen Kunststofffolien gemäß den Merkmalen des Anspruchs 5, welche in Form von Schlauchbeuteln für eine portionierte Aufnahme von Produkten unterteilt und abgetrennt werden, wobei ein Ultraschallgenerator zur Anregung eines Bearbeitungswerkzeugs und ein Gegenwerkzeug vorgesehen sind, welche mittels eines Antriebs und einer Führung gegeneinander zusammenfahrbar sind, und mit Mitteln zur Trennung von verschweißten Schlauchbeuteln, wobei das Bearbeitungswerkzeug und das Gegenwerkzeug sowohl für ein Ultraschall-Schweißen als auch für einen im Wesentlichen rein mechanischen Trennvorgang ohne oder mit verringerter Ultraschallanregung speziell ausgebildet sind. Auf diese Weise kann mit ein und derselben Vorrichtung und Werkzeugteilen sowohl eine dichte, präzise Schweißnaht an vergleichsweise dünnen Kunststofffolien und unabhängig von der Art der Produkte über eine Länge von auch mehreren 10 cm erzeugt werden und anschließend - nach Abschaltung der Ultraschallanregung - eine mechanische Trennung der so gebildeten Schlauchbeutel durchgeführt werden. Das Bearbeitungswerkzeug und das Gegenwerkzeug sind dabei derart geformt, dass eine optimale Verschweißung mittels Ultraschall möglich ist. Durch ein Zusammenbringen der beiden Werkzeugteile in das Material der Kunststofffolien können die verschweißten Schlauchbeutel so auf vergleichsweise einfache Art und Weise rückstandsfrei voneinander getrennt werden. Erfindungsgemäß sind ein Antrieb und/oder eine Führung mit Distanzelementen ausgestattet, welche ein Aufrechterhalten eines definierten Bearbeitungsspaltes von mindestens 0,05 mm während des Ultraschall-Schweißens gewährleisten. Die Distanzelemente können beispielsweise nach einem vorteilhaften diesbezüglichen Aspekt der Erfindung als gefederte Distanzklötze an den Führungselementen geformt sein. Die Distanzklötze sind so gefedert, dass bei Auftreffen auf die Distanzklötze der definierte Mindest-Bearbeitungsspalt beibehalten wird, auch bei der Anregung des Bearbeitungswerkzeugs mittels Ultraschall. Sobald die Ultraschallanregung abgestellt ist, können die beiden Werkzeugteile weiter aufeinander zu bewegt werden und beispielsweise auch direkt in Kontakt miteinander gebracht werden, so dass die versprödete Schweißlinie sauber auf mechanischem Weg abgetrennt werden kann. Alternativ können auch andere Distanzelemente zur Aufrechterhaltung des minimalen Bearbeitungsspaltes vorgesehen sein.

Erfindungsgemäß ist das Gegenwerkzeug mit einer planen Stirnfläche versehen und das Bearbeitungswerkzeug weist eine in etwa dreieckförmige Form nach Art einer Schneide auf. Die Schneide kann insbesondere in einem Winkel von etwa 164° gebildet sein, was sich für das Trennen von mit Ultraschall-Schweißen verbundenen dünnen Kunststofffolien als äußerst vorteilhaft erwiesen hat.

Weitere Vorteile, Merkmale und Aspekte der vorliegenden Erfindung werden im Zusammenhang mit der nachfolgenden detaillierten Beschreibung von einem Ausführungsbeispiel deutlicher offenbar werden, wobei die Beschreibung im Zusammenhang mit den beigefügten Zeichnungen erfolgt, in welchen:
- Fig. 1: eine Schnittansicht eines Ausführungsbeispiels einer erfindungsgemäßen Vorrichtung in geöffnetem Zustand ist;
- Fig. 2: eine entsprechende Schnittansicht des ersten Ausführungsbeispiels der erfindungsgemäßen Vorrichtung in geschlossenem Zustand des Bearbeitungswerkzeugs ist;
- Fig. 3: eine perspektivische Ansicht des Ausführungsbeispiels einer erfindungsgemäßen Vorrichtung mit geöffnetem Bearbeitungswerkzeug ist;
- Fig. 4: eine schematische Seitenansicht einer mit gemäß dem Stand der Technik hergestellten Schlauchbeutel-Verpackung ist;
- Fig. 5: eine schematische Querschnittsansicht durch einen Schlauchbeutel mit Überlappungszone zwischen Bearbeitungswerkzeug und Gegenwerkzeug gemäß einem Ausführungsbeispiel der Erfindung ist; und
- Fig. 6a bis 6c: verschiedene Stadien der Bearbeitung von Schlauchbeutel-Verpackungen gemäß einem Ausführungsbeispiel der Erfindung zeigen.

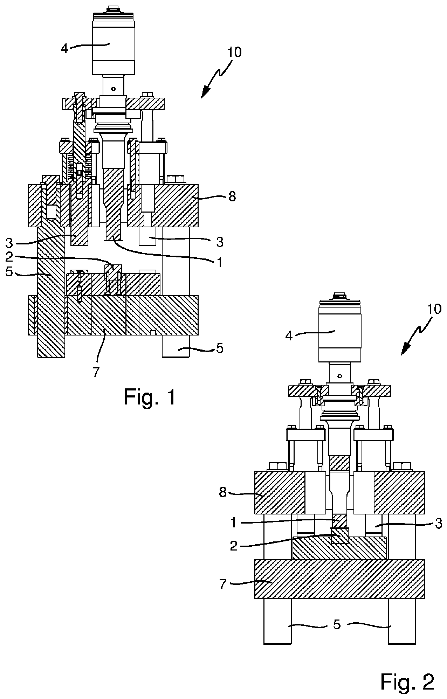

Die Figuren 1 bis 3 zeigen in verschiedenen Ansichten ein Ausführungsbeispiel einer Vorrichtung zur Konfektionierung von dünnen Kunststofffolien, welche in die Form von Schlauchbeuteln für eine portionierte Aufnahme von Produkten unterteilt und abgetrennt werden. In der Figur 1 ist eine Schnittansicht gezeigt, bei welcher das Bearbeitungswerkzeug 1 an der Vorrichtung 10 sich in einer geöffneten oberen Position befindet. Die Figur 3 zeigt eine entsprechende perspektivische Ansicht, ebenfalls bei geöffnetem Bearbeitungswerkzeug 1, wohingegen die Figur 2 eine Schnittansicht des Zustands zeigt, in welchem das Bearbeitungswerkzeug 1 und das Gegenwerkzeug 2 aufeinander zugefahren sind für ein Schweißen mittels Ultraschall und/oder für das Durchführen des Trennvorgangs der so hergestellten Schlauchbeutel.

Bei diesem Ausführungsbeispiel handelt es sich um eine vertikal agierende Vorrichtung, wobei je nach Anwendungsfall das erfindungsgemäße Verfahren und die erfindungsgemäße Vorrichtung auch als ein horizontales System aufgebaut sein können. Die Vorrichtung 10 besteht im Wesentlichen aus einer Grundplatte 7, an deren Oberseite das Gegenwerkzeug 2 lösbar montiert ist, damit das Gegenwerkzeug 2 bei Bedarf ausgetauscht werden kann. An der Oberseite der Grundplatte 7 ist eine Montageplatte 8 vorgesehen, welche über vier Führungen 5 vertikal beweglich mit der Grundplatte 7 gekoppelt ist, um das an der Oberseite vorgesehene Bearbeitungswerkzeug 1 auf das Gegenwerkzeug 2 hin zuzubewegen und wieder zu entfernen (vgl. Figur 1 und Figur 2).

Die Vorrichtung 10 ist speziell angepasst für das Ausführen von sowohl eines Ultraschall-Schweißens von dünnen Kunststofffolien als auch das Abtrennen von mittels des Ultraschall-Schweißens erzeugten Schlauchbeuteln, wie im Folgenden näher erläutert wird. An der Oberseite der Montageplatte 8 ist ein Ultraschallgenerator 4 montiert, der mit dem Bearbeitungswerkzeug 1 derart in Verbindung steht, dass eine Ultraschallanregung des Bearbeitungswerkzeugs 1 hervorgerufen werden kann. Es können auch mehrere Ultraschallgeneratoren 4 an der Montageplatte 8 montiert sein. Das Bearbeitungswerkzeug 1 ist zusammen mit dem Ultraschallgenerator 4 an der Montageplatte 8 über vier federbelastete Distanzklötze 3 montiert. Für das Durchführen einer Verschweißung und eines Abtrennens von so verschweißten Schlauchbeuteln wird die Montageplatte 8 mittels der Führungen 5 nach unten auf die Grundplatte 7 hin und damit auf das Gegenwerkzeug 2 zu bewegt, bis die gefederten Distanzklötze 3 mit entsprechenden Gegenstücken auf der Unterseite (Seite der Grundplatte 7) in Kontakt kommen. Die gefederten Distanzklötze 3 gewährleisten dabei, dass zwischen dem Bearbeitungswerkzeug 1 und dem Gegenwerkzeug 2 so lange ein minimaler vordefinierter Bearbeitungsspalt verbleibt, wie das Bearbeitungswerkzeug 1 mittels Ultraschall angeregt ist. Der minimale Bearbeitungsspalt beträgt nach einem vorteilhaften Aspekt der Erfindung mindestens 0,05 mm. Auf diese Weise können auch sehr dünne Kunststofffolien, beispielsweise im Bereich von 30 µm, mit der Vorrichtung 10 per Ultraschall verschweißt werden. Falls dickere Kunststofffolien mit der Vorrichtung 10 zu verschweißen sind, kann der Bearbeitungsspalt entsprechend größer gewählt werden.

Nach der Durchführung der Verschweißung mittels Ultraschall wird die Vorrichtung 10 derart angesteuert, dass das Bearbeitungswerkzeug 1 weiter in Richtung auf das Gegenwerkzeug 2 gefahren wird unter Überwindung der Federkraft der gefederten Distanzklötze 3. Durch diese weitere Bewegung der beiden Werkzeugteile 1, 2 aufeinander zu wird die Trennung der hergestellten Schlauchbeutel bewirkt. Da durch das Ultraschweißen eine gewisse Versprödung an der Schweißlinie der Kunststofffolien 6 hervorgerufen wird, kann auf diesem Wege eine durchgängige Separierung von so hergestellten Schlauchbeuteln mit den jeweiligen Produkten darin enthalten durchgeführt werden.

Die Durchführung der Separierung beziehungsweise Trennung der einzelnen verschweißten Schlauchbeutel kann dabei direkt an der Schweißlinie erfolgen.

Nach dem Trennen werden das Bearbeitungswerkzeug und damit der Ultraschallgenerator 4 wieder nach oben bewegt, so dass die sich zwischen den beiden Werkzeugteilen 1, 2 befindliche Kunststofffolie beziehungsweise der Kunststofffolienschlauch entsprechend der Größe der Schlauchbeutel-Verpackung weiterbewegt wird und der Vorgang von Neuem wiederholt wird, das heißt mit dem ersten Schritt eines Ultraschall-Verschweißens und dem zweiten anschließenden Schritt eines rein mechanischen Trennens.

Aus der Figur 3 ist zu erkennen, dass das Bearbeitungswerkzeug 1 und das Gegenwerkzeug 2 eine längliche stegartige Form aufweisen, so dass auch relativ breite Schlauchbeutel aus dünnen Kunststofffolien verarbeitet werden können, vorzugsweise bis in die Größe von einigen 10 cm. Bei diesem Ausführungsbeispiel ist eine Steuerung der Vorrichtung 10 derart vorgesehen, dass die Ultraschallanregung des Bearbeitungswerkzeugs 1 mittels des Ultraschallgenerators 4 in Abhängigkeit von einer Steuerung eines Antriebs (in der Zeichnung nicht dargestellt) erfolgt. Beispielsweise kann anhand der Servokurve eines Antriebs der Vorrichtung 10 das Anschalten und das Abschalten des Ultraschalls gezielt gesteuert werden, so dass die Ultraschallanregung nur dann erfolgt, wenn das Verschweißen durchgeführt wird und das Bearbeitungswerkzeug 1 dabei gezielt in einem vorherbestimmten Abstand von dem Gegenwerkzeug gehalten ist. Auf diese Weise wird sicher vermieden, dass die beiden Werkzeugteile, nämlich das Bearbeitungswerkzeug 1 und das Gegenwerkzeug 2, beschädigt werden. Auf diese Weise lässt sich das erfindungsgemäße Verfahren auch in bestehenden Vorrichtungen 10 leicht integrieren mit nur geringen Umbaumaßnahmen.

Die Durchführung des Verfahrens gemäß der Erfindung kann mit der beschriebenen Vorrichtung 10 oder einer anders aufgebauten Verpackungsmaschine realisiert werden und erfolgt vorzugsweise in einem vierstufigen Prozess während eines kontinuierlichen Zusammenfahrens der beiden Werkzeugteile, wobei die folgenden Unterschritte ausgeführt werden:
i) Bewegen des Gegenwerkzeugs 2 während der Ultraschallanregung des Bearbeitungswerkzeugs 1 bis zum Auftreffen auf gefederte Distanzklötze 3 und Durchführung der Schweißung (alternativ kann selbstverständlich auch das Bearbeitungswerkzeug 1 bewegt werden beziehungsweise beide Werkzeugteile 1, 2);
ii) Abschalten der Ultraschallanregung des Bearbeitungswerkzeuges 1 während des Einfederns in die gefederten Distanzklötze 3, wobei ein im Wesentlichen konstanter, paralleler Abstand zwischen beiden Teilen des Werkzeugs aufrechterhalten wird;
iii) Überwinden der Federkraft der gefederten Distanzklötze 3 und weiteres Zusammenfahren der beiden Teile 1, 2 des Werkzeugs zur Durchführung der Trennung der Schlauchbeutel an einer definierten Trennlinie; und
iv) Zurückfahren der beiden Teile 1, 2 des Werkzeugs und vorzugsweise erneute Aktivierung der Ultraschallanregung des Bearbeitungswerkzeugs 1.

Mit diesem gezielten zweistufigen Verfahren mit den vier geschilderten Unterschritten konnten bei Versuchen durch die Erfinder selbst bei sehr dünnen Kunststofffolien sehr gute Ergebnisse erzielt werden, sowohl was die Dichtigkeit der gefertigten Schlauchbeutel, was die optische Ansehnlichkeit als auch was die Hygiene und die Verringerung des Ausschusses anbelangt. Die mit dem Ultraschallverfahren hergestellte Schweißnaht ist stabil, auch im Fall von etwaigen Produktresten im Bereich der Schweißlinie. Die Trennlinie kann bündig an die Schweißnaht direkt angelegt werden, ohne dass es zu einer unerwünschten Erzeugung von Taschen kommt, in denen sich Produktrest ansammeln könnten. Mit dem erfindungsgemäßen Verfahren und der erfindungsgemäßen Vorrichtung 10 konnten deutlich höhere Taktfrequenzen im Herstellungsprozess derartiger mit Produkten gefüllter Schlauchbeutel erreicht werden. Hierdurch konnte die Effizienz des Verpackungsprozesses deutlich erhöht werden. Nicht zuletzt sind das erfindungsgemäße Verfahren und die erfindungsgemäße Vorrichtung 10 relativ einfach auch in bestehende Verpackungsanlagen zu integrieren. Auf diese Weise kann auch ein nachträglicher Einbau der entsprechenden Vorrichtungsteile zur Durchführung des erfindungsgemäßen Verfahrens erfolgen.

In der schematischen Seitenansicht der Fig. 4 ist ein Problem von Schlauchbeutel-Verpackungen dargestellt, welche mit einer konventionellen Technik realisiert werden: Dieser Längsschnitt zeigt einen Schlauchbeutel 15, der mit einem Produkt 18 befüllt wurde und anschließend mit drei Schweißnähten 16 verschlossen wurde. Nach dem Abtrennen entsteht zwischen der obersten Schweißnaht 16 und der Trennlinie 17 eine Art Tasche 20, in welcher Reste 19 vom Produkt 18 verbleiben. Dieses Problem wird bei der vorliegenden Erfindung effektiv vermieden.

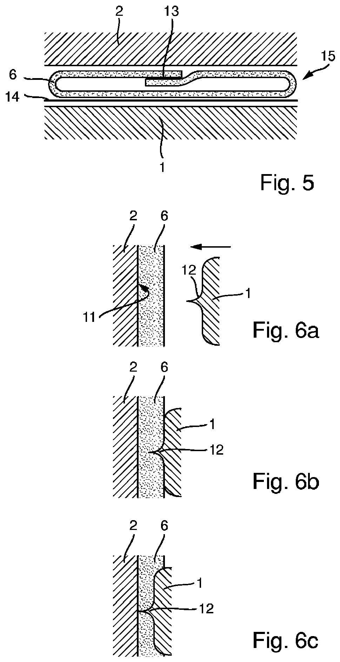

Die Fig. 5 zeigt in einer schematischen Querschnittsansicht einen Schlauchbeutel 15 mit Überlappungszone der Kunststofffolie 6 zwischen Bearbeitungswerkzeug 1 und Gegenwerkzeug 2 gemäß einem Ausführungsbeispiel der Erfindung. Die an der Oberseite überlappend zusammengelegt Kunststofffolie 6 wird durch die Vorrichtung gemäß der Erfindung zu einem geschlossenen Schlauchbeutel 15 geformt indem die Folie 6 mittels dem Bearbeitungswerkzeug 1 und dem Gegenwerkzeug 2 verschweißt wird und zwar mit einem Ultraschall-Schweißverfahren. Anschließend werden die Werkzeuge 1, 2 weiter aufeinander zu bewegt und die Schlauchbeutel 15 werden mechanisch mittels einer Schneide 12 mit Schneidkante 14 abgetrennt. Die Schneide 12 ist bei diesem Ausführungsbeispiel am unten vorgesehenen Bearbeitungswerkzeug 1 angebracht. Die Werkzeuge 1, 2 können jedoch auch umgekehrt angeordnet sein. Sie können auch horizontal statt vertikal bewegbar sein.

Die Fig. 6a bis 6c zeigen in schematischen Schnittansichten verschiedene Stadien der Bearbeitung von Schlauchbeutel-Verpackungen gemäß einem Ausführungsbeispiel der Erfindung. Die Kunststofffolien 6, welche zu einem mit einem Produkt befüllten Schlauchbeutel verarbeitet werden, sind bei diesem Ausführungsbeispiel vertikal zwischen einem Gegenwerkzeug 2 und einem Bearbeitungswerkzeug 1 eingelegt. Das Bearbeitungswerkzeug 1 - oder alternativ das Gegenwerkzeug 2 - wird bis zum Auftreffen auf gefederte Distanzklötze (nicht gezeigt) auf die Folien hin zu bewegt (linke Richtung in Fig. 6a). Dieser Zustand ist in der Fig. 6b zu sehen. In diesem Stadium wird die erfindungsgemäße Schweißung mittels einem Ultraschall-Schweißverfahren durchgeführt, wobei in diesem Moment sich die beiden Werkzeuge 1, 2 noch nicht berühren. Es besteht ein in Abhängigkeit von der Folienart und -dicke vordefinierter Spalt zwischen dem Bearbeitungswerkzeug 1 und dem Gegenwerkzeug 2. Im nächsten Schritt (vgl. Fig. 6c) wird das Bearbeitungswerkzeug 1 unter Überwinden der Federkraft der gefederten Distanzklötze weiter nach link bewegt. Durch das Zusammenfahren der beiden Werkzeuge 1, 2 und das Eindringen einer in etwa dreieckförmigen Schneide 12 mit Schneidspitze 14 in das Material der Folien 6 die Trennung der Schlauchbeutel an der gewünschten Trennlinie hervorgerufen.

Selbstverständlich kann die Form des Bearbeitungswerkzeugs 1 und des Gegenwerkzeugs 2 variieren, ohne den Rahmen der Erfindung, wie sie in den nachfolgenden Ansprüchen definiert ist, zu verlassen. Auch kann die Vorrichtung 10 modifiziert werden und beispielsweise als eine horizontal wirkende Vorrichtung aufgebaut sein. Die Einhaltung des minimalen Bearbeitungsspaltes zwischen dem Bearbeitungswerkzeug 1 und dem Gegenwerkzeug 2 während des Ultraschall-Schweißens kann auch auf andere Art und Weise als mit den gefederten Distanzklötzen 3 erreicht werden, beispielsweise durch eine gezielte Ansteuerung des Antriebs beziehungsweise der Führungen der Vorrichtung 10. Die Kunststofffolien können sowohl als reine Kunststofffolien oder als Folien aus einer Materialmischung bestehen. So können mit der Erfindung auch Folien aus Kunststoff mit einem Aluminiumanteil sehr gut verschweißt und separiert werden.

## Patentansprüche

1. Konfektionierung von zwei- oder mehrlagigen dünnen Kunststofffolien (6), die in Form von Schlauchbeuteln für eine portionierte Aufnahme von verschiedenartigen Produkten unterteilt und abgetrennt werden, wobei die Kunststofffolien in vorherbestimmten Abständen zur Bildung von beutelartigen Behältnissen mit im Wesentlichen quer zur Längsrichtung verlaufenden Schweißnähten versehen werden und die Behältnisse durch einen Schnitt- oder Trennvorgang jeweils voneinander separiert werden, mit den Schritten:
a) Verschweißen der Folien in vorherbestimmten Abständen mittels eines Ultraschall-Schweißverfahrens, wobei zwischen einem eine etwa dreieckförmige Schneide (12) aufweisenden Bearbeitungswerkzeug (1) und einem Gegenwerkzeug (2) mit einer planen Stirnfläche (11) ein definierter, folienabhängiger Abstand beim Schweißen eingehalten wird und wobei ein minimaler, folienabhängiger Bearbeitungsspalt eingehalten wird, um welchen das Bearbeitungswerkzeug (1) und das Gegenwerkzeug (2) während der Ultraschallanregung voneinander entfernt gehalten werden;
b) Vereinzeln der so verschweißten Schlauchbeutel mittels eines mechanischen Trennungsverfahrens ohne oder mit verringerter Ultraschallanregung an der Stelle der jeweiligen Schweißnähte, wobei das Bearbeitungswerkzeug (1) nach Schritt a) näher an das Gegenwerkzeug (2) herangeführt wird.

2. Verfahren nach Anspruch 1, **dadurch gekennzeichnet**, dassin Schritt b) das Bearbeitungswerkzeug (1) und das Gegenwerkzeug (2) zum Trennen der Schlauchbeutel direkt in Berührung gebracht werden.

3. Verfahren nach Anspruch 1 oder 2, **dadurch gekennzeichnet, dass** die Steuerung der Ultraschallanregung des Bearbeitungswerkzeugs (1) in Abhängigkeit von einer Steuerung eines Maschinenantriebs erfolgt.

4. Verfahren nach einem der vorangegangenen Ansprüche, wobei das Bearbeitungswerkzeug (1) und das Gegenwerkzeug (2) bei jedem Bearbeitungsschritt kontinuierlich zusammenfahren und folgende Unterschritte dabei durchgeführt werden:
i) Bewegen des Gegenwerkzeugs (2) während der Ultraschallanregung des Bearbeitungswerkzeugs (1) bis zum Auftreffen auf gefederte Distanzklötze (3) und Durchführung der Schweißung;
ii) Abschalten der Ultraschallanregung des Bearbeitungswerkzeuges (1) während des Einfederns in die Distanzklötze (3), wobei ein im Wesentlichen konstanter, paralleler Abstand zwischen beiden Teilen des Werkzeugs aufrechterhalten wird;
iii) Überwinden der Federkraft der gefederten Distanzklötze (3) und weiteres Zusammenfahren der beiden Teile des Werkzeugs zur Durchführung der Trennung an einer Trennlinie; und
iv) Zurückfahren der beiden Teile (1, 2) des Werkzeugs.

5. Vorrichtung (10) zur Konfektionierung von zwei- oder mehrlagigen dünnen Kunststofffolien (6), die in Form von Schlauchbeuteln für eine portionierte Aufnahme von verschiedenartigen Produkten unterteilt und abgetrennt werden, insbesondere zur Durchführung des Verfahrens nach einem der Ansprüche 1 bis 4, wobei ein oder mehrere Ultraschallgenerator(en) (4) zur Anregung eines Bearbeitungswerkzeugs (1) und ein Gegenwerkzeug (2) vorgesehen sind, die mittels eines Antriebs und einer Führung (5) gegeneinander zusammenfahrbar sind, und mit Mitteln zur Trennung von verschweißten Schlauchbeuteln, wobei das Bearbeitungswerkzeug (1) und das Gegenwerkzeug (2) sowohl für ein Ultraschallschweißen als auch für einen im Wesentlichen rein mechanischen Trennvorgang ohne oder mit verringerter Ultraschallanregung speziell ausgebildet sind, **dadurch gekennzeichnet, dass** der Antrieb und/oder die Führung (5) mit Distanzelementen ausgestattet sind, welche die Aufrechterhaltung eines definierten, folienabhängigen Bearbeitungsspaltes während des Ultraschallschweißens gewährleisten und dass das Gegenwerkzeug (2) eine plane Stirnfläche (11) und das Bearbeitungswerkzeug (1) eine etwa dreieckförmige Schneide (12) aufweist, deren Form insbesondere stumpf ist.

6. Vorrichtung nach Anspruch 5, **dadurch gekennzeichnet, dass** gefederte Distanzklötze (3) derart vorgesehen sind, dass beim Ultraschallschweißen ein minimaler, folienabhängiger Bearbeitungsspalt zwischen dem Bearbeitungswerkzeug (1) und dem Gegenwerkzeug (2) aufrechterhalten bleibt.

## Claims

1. Assembly of two- or multi-layer thin plastic films (6) which are divided and separated in the form of tubular pouches for portioned accommodation of diverse products, wherein the plastic films are provided at predetermined intervals with weld seams running substantially transversely to the longitudinal direction to form pouch-like containers, and the containers are each separated from one another by a cutting or separating process with the steps:
a) welding of the films at predetermined intervals by means of an ultrasonic welding process wherein, between a machining tool (1) with a roughly triangular cutting edge (12) and a counter-tool (2) with a flat end face (11), a defined film-dependent interval is maintained during welding, and wherein a minimum film-dependent machining gap is maintained, around which the machining tool (1) and the counter-tool (2) are held apart from one another during the ultrasonic excitation;
b) separation of the tubular pouches thus welded by means of a mechanical separation process without or with reduced ultrasonic excitation at the point of the respective weld seams, wherein the machining tool (1) after step a) is moved closer to the counter-tool (2).

2. Method according to claim 1, **characterised in that** in step b) the machining tool (1) and the counter-tool (2) are brought directly into contact to separate the tubular pouches.

3. Method according to claim 1 or 2, **characterised in that** control of the ultrasonic excitation of the machining tool (1) is effected on the basis of control of a machine drive.

4. Method according to any of the preceding claims, wherein the machining tool (1) and the counter-tool (2) move together continuously during each machining step, and in so doing the following subsidiary steps are taken:
i) movement of the counter-tool (2) during ultrasonic excitation of the machining tool (1) until sprung spacer blocks (3) are struck and welding is conducted;
ii) shutdown of ultrasonic excitation of the machining tool (1) during deflection into the spacer blocks (3), wherein a substantially constant parallel distance between both parts of the tool is maintained;
iii) overcoming of the spring force of the sprung spacer blocks (3) and further movement together of the two parts of the tool to effect separation at a separating line; and
iv) retraction of the two parts of the tool.

5. Apparatus (10) for the assembly of two- or multi-layer thin plastic films (6) which are divided and separated in the form of tubular pouches for portioned accommodation of diverse products, in particular for the implementation of the method according to any of claims 1 to 6, wherein one or more ultrasound generator(s) (4) is or are provided for excitation of a machining tool (1) and a counter-tool (2), which may be moved towards one another by means of a drive and a guide (5), and with means for the separation of welded tubular pouches, wherein the machining tool (1) and the counter-tool (2) are specially designed for ultrasonic welding and also for a substantially purely mechanical separating process without or with reduced ultrasonic excitation, **characterised in that** the drive and/or the guide (5) are equipped with spacer elements which ensure the maintenance of a defined film-dependent machining gap during ultrasonic welding, and that the counter-tool (2) has a flat end face (11) and the machining tool (1) a triangular cutting edge (12), the shape of which is in particular obtuse.

6. Apparatus according to claim 5, **characterised in that** sprung spacer blocks (3) are provided in such a way that, during ultrasonic welding, a minimum film-dependent machining gap is maintained between the machining tool (1) and the counter-tool (2).

## Revendications

1. Confectionnement de films plastiques (6) minces à deux couches ou à couches multiples, qui sont divisés et détachés sous la forme de sachets tubulaires pour un logement sous forme de portions de produits de types divers, dans lequel les films plastiques sont pourvus, à des espacements préalablement définis, afin de former des récipients de type sachet, de joints de soudure s'étendant sensiblement de manière transversale par rapport à la direction longitudinale et les récipients sont séparés les uns des autres par une opération de découpe ou de séparation, avec les étapes suivantes consistant à :
a) souder les films à des espacements préalablement définis au moyen d'un procédé de soudage par ultrasons, dans lequel un espacement défini, dépendant des films est respecté lors du soudage entre un outil d'usinage (1) présentant une lame (12) approximativement en forme de triangle et un contre-outil (2) avec une surface frontale (11) plane et dans lequel un interstice d'usinage minimal dépendant des films est respecté, autour duquel l'outil d'usinage (1) et le contre-outil (2) sont maintenus éloignés l'un de l'autre au cours de l'excitation par ultrasons ;
b) trier les sachets tubulaires ainsi soudés au moyen d'un procédé de séparation mécanique sans ou avec une excitation par ultrasons réduite à l'emplacement des joints de soudure, dans lequel l'outil d'usinage (1) est davantage rapproché du contre-outil (2) après l'étape a).

2. Procédé selon la revendication 1, **caractérisé en ce qu'**à l'étape b), l'outil d'usinage (1) et le contre-outil (2) sont amenés directement en contact afin de séparer les sachets tubulaires.

3. Procédé selon la revendication 1 ou 2, **caractérisé en ce que** la commande de l'excitation par ultrasons de l'outil d'usinage (1) est effectuée en fonction d'une commande d'un entraînement de machine.

4. Procédé selon l'une quelconque des revendications précédentes, dans lequel l'outil d'usinage (1) et le contre-outil (2) sont assemblés en continu lors de chaque étape d'usinage, et sont mises en oeuvre, dans ce cadre, les sous-étapes suivantes consistant à :
i) déplacer le contre-outil (2) au cours de l'excitation par ultrasons de l'outil d'usinage (1) jusqu'à l'impact sur des cales d'écartement (3) sur ressorts, et mettre en oeuvre le soudage ;
ii) mettre hors service l'excitation par ultrasons de l'outil d'usinage (1) au cours du débattement dans les cales d'écartement (3), dans lequel un espacement parallèle sensiblement constant entre les deux parties de l'outil est conservé ;
iii) surmonter la force de ressort des cales d'espacement (3) sur ressorts et poursuivre l'assemblage des deux parties de l'outil afin de mettre en oeuvre la séparation au niveau d'une ligne de séparation ; et
iv) déplacer en sens inverse les deux parties (1, 2) de l'outil.

5. Dispositif (10) servant à confectionner des films plastiques (6) minces à deux couches ou à couches multiples, qui sont divisés et détachés sous la forme de sachets tubulaires pour le logement sous forme de portions de produits de types divers, en particulier afin de mettre en oeuvre le procédé selon l'une quelconque des revendications 1 à 4, dans lequel sont prévus un ou plusieurs générateurs d'ultrasons (4) servant à exciter un outil d'usinage (1) et un contre-outil (2), qui peuvent être assemblés l'un contre l'autre au moyen d'un entraînement et d'un guidage (5), et avec des moyens servant à séparer des sachets tubulaires soudés, dans lequel l'outil d'usinage (1) et le contre-outil (2) sont réalisés de manière spécifique aussi bien pour un soudage par ultrasons que pour une opération de séparation sensiblement purement mécanique sans ou avec une excitation par ultrasons réduite, **caractérisé en ce que** l'entraînement et/ou le guidage (5) sont équipés d'éléments d'écartement, qui garantissent la conservation d'un interstice d'usinage défini dépendant des films au cours du soudage par ultrasons, et **en ce que** le contre-outil (2) présente une surface frontale (11) plane et l'outil d'usinage (1) présente une lame (12) approximativement en forme de triangle, dont la forme est en particulier émoussée.

6. Dispositif selon la revendication 5, **caractérisé en ce que** des cales d'écartement (3) sur ressorts sont prévues de telle manière que lors du soudage par ultrasons, un interstice d'usinage minimal dépendant des films reste conservé entre l'outil d'usinage (1) et le contre-outil (2).
